# EUROPÄISCHE PATENTSCHRIFT

(11) **EP 3 108 996 B1**
(45) Veröffentlichungstag und Bekanntmachung des Hinweises auf die Patenterteilung: **13.09.2017**
(21) Anmeldenummer: 15173333.4
(22) Anmeldetag: 23.06.2015
(51) Int. Cl.: G01D 5/00

(54) **VORRICHTUNG ZUM MESSEN VON VERLAGERUNGEN EINES ROTIERENDEN OBJEKTES**
DEVICE FOR MEASURING DISPLACEMENT OF A ROTATING OBJECT
DISPOSITIF DESTINE A MESURER LES DEPLACEMENTS D'UN OBJET ROTATIF

(43) Veröffentlichungstag der Anmeldung: 28.12.2016
(73) Patentinhaber: Dr. Johannes Heidenhain GmbH, 83301 Traunreut (DE)
(72) Erfinder: GEYERMANN, Dirk, 83377 Vachendorf (DE); KUMMETZ, Jens, 83278 Traunstein (DE)

(56) Entgegenhaltungen:
- EP-A2- 1 162 030
- EP-A2- 1 434 027
- CN-A- 101 344 457
- CN-A- 101 972 948
- CN-A- 103 341 789
- DE-A1-102012 205 599

## Beschreibung

### GEBIET DER TECHNIK

Die vorliegende Erfindung betrifft eine Vorrichtung zum Messen von Verlagerungen eines rotierenden Objektes nach dem Oberbegriff des Anspruchs 1.

Die Bearbeitungsgenauigkeit einer Werkzeugmaschine wird unter anderem von der Genauigkeit der Rotation der Werkzeugspindel (Spindel) bestimmt. Eine Analyse der Genauigkeit der Werkzeugspindel erfordert die Bestimmung von Verlagerungen der Spindel. Die Ergebnisse können dazu verwendet werden die auftretenden Verlagerungen zu korrigieren bzw. an der Werkzeugmaschine konstruktive Maßnahmen zu treffen, um die Verlagerungen zu minimieren und damit die Bearbeitungsgenauigkeit der Werkzeugmaschine zu erhöhen.

Die Verlagerungen der Spindel können ihre Ursache in auftretenden Kräften bei der Rotation der Spindel und in thermisch bedingten Ausdehnungen haben.

### STAND DER TECHNIK

Eine gattungsgemäße Vorrichtung zum Messen der Verlagerungen eines Drehtisches ist in der EP 1 434 027 A2 beschrieben.

Zur Messung der gegenseitigen Verlagerungen eines Drehtisches gegenüber einer Basis ist ein die Rotation des Drehtisches entkoppelndes Radiallager vorgesehen. Weiterhin sind zentral angeordnete Messmittel vorgesehen, die Querverlagerungen in zwei senkrecht zueinander angeordneten Richtungen X, Y erfassen. Die Messmittel umfassen ein Kreuzgitter, das berührungslos von einem Abtastkopf abgetastet wird. Das Kreuzgitter ist an einem rotationsentkoppelten Bauteil angeordnet und der Abtastkopf an einem dazu in X- und Y- Richtung an der Basis fixierten zweiten Bauteil angeordnet.

Verlagerungen in Achsrichtung des Drehtisches werden mittels eines berührenden Tasters gemessen, der eine Bezugsfläche des drehenden Tisches selbst antastet.

### ZUSAMMENFASSUNG DER ERFINDUNG

Der vorliegenden Erfindung liegt die Aufgabe zugrunde, eine Vorrichtung zum Messen von Verlagerungen eines rotierenden Objektes anzugeben, mit der Verlagerungen möglichst präzise gemessen werden können.

Diese Aufgabe wird erfindungsgemäß durch eine Vorrichtung mit den Merkmalen des Anspruchs 1 gelöst.

Die erfindungsgemäß ausgeführte Vorrichtung hat den Vorteil, dass damit auch Verlagerungen von schnell rotierenden Objekten, insbesondere von Spindeln einer Werkzeugmaschine, hochgenau erfasst werden können.

Die Vorrichtung zum Messen von Verlagerungen eines rotierenden Objektes gegenüber einer Basis umfasst einen Rotor, der für den Messvorgang mit dem zu vermessende rotierenden Objekt starr gekoppelt wird.

Die Vorrichtung umfasst weiterhin ein Zwischenteil, wobei zwischen dem Rotor und dem Zwischenteil ein die Rotation des Rotors entkoppelndes Radiallager mit einer Drehachse angeordnet ist. Das Radiallager ist dazu ausgebildet Rotationen des Rotors um die Drehachse vom Zwischenteil zu entkoppeln. Das Radiallager überträgt Verlagerungen des Rotors, welche von dem zu vermessenden Objekt auf den Rotor eingeleitet werden, in vier Freiheiten auf das Zwischenteil, wozu das Radiallager entsprechend steif und spielfrei ausgebildet ist. Die vier Freiheiten sind
- eine erste translatorische Achse senkrecht zur Drehachse
- eine zweite translatorische Achse senkrecht zur Drehachse und senkrecht zur ersten translatorischen Achse
- eine erste rotatorische Achse um die erste translatorische Achse und
- eine zweite rotatorische Achse um die zweite translatorische Achse.

Die Vorrichtung umfasst weiterhin eine Kupplung und einen Stator, wobei das Zwischenteil über die Kupplung an dem Stator angeordnet ist. Die Kupplung ist dazu ausgebildet das Zwischenteil drehstarr an den Stator zu koppeln und Verlagerungen des Zwischenteils gegenüber dem Stator in allen anderen fünf Freiheitsgraden zuzulassen.

Die Vorrichtung umfasst weiterhin Messmittel welche dazu ausgelegt sind Verlagerungen des Zwischenteils gegenüber dem Stator in diesen fünf Freiheitsgraden zu messen, wobei diese Messmittel jeweils die Komponenten Maßverkörperung und Abtastkopf zur berührungslosen Abtastung der Maßverkörperung umfassen und eine der Komponenten Maßverkörperung und Abtastkopf am Zwischenteil und die andere Komponente am Stator angeordnet ist.

Die Messmittel umfassen vorzugsweise ein erstes Messmittel, das radial zur Drehachse beabstandet angeordnet ist und dazu ausgebildet ist eine Verlagerung des Zwischenteils gegenüber dem Stator in einer ersten Richtung senkrecht zur Drehachse zu messen

Die Messmittel umfassen vorzugsweise ein zweites Messmittel, das radial zur Drehachse und zum ersten Messmittel in Umfangsrichtung versetzt angeordnet ist und dazu ausgebildet ist eine Verlagerung des Zwischenteils gegenüber dem Stator in einer zweiten Richtung senkrecht zur Drehachse zu messen.

Die Messmittel umfassen vorzugsweise ein drittes Messmittel, das radial zur Drehachse und zum ersten Messmittel in Richtung der Drehachse beabstandet angeordnet ist und dazu ausgebildet ist eine Verlagerung des Zwischenteils gegenüber dem Stator in der ersten Richtung senkrecht zur Drehachse zu messen.

Die Messmittel umfassen vorzugsweise ein viertes Messmittel, das radial zur Drehachse und zum zweiten Messmittel in Richtung der Drehachse beabstandet angeordnet ist und dazu ausgebildet ist eine Verlagerung des Zwischenteils gegenüber dem Stator in der zweiten Richtung senkrecht zur Drehachse zu messen.

Die Messmittel umfassen vorzugsweise ein fünftes Messmittel, das dazu ausgebildet ist eine Verlagerung des Zwischenteils gegenüber dem Stator in Richtung der Drehachse zu messen.

Der winkelmäßige Versatz des ersten Messmittels gegenüber dem zweiten Messmittel ist vorzugsweise 90°. Mit dieser Anordnung ist es einfach möglich Verlagerungen des Zwischenteils gegenüber dem Stator in zwei um 90° zueinander versetzte Richtungen zu messen.

Ebenso sind das dritte Messmittel und das vierte Messmittel vorzugsweise um 90° in Umfangsrichtung zueinander versetzt angeordnet.

Ein besonders einfacher Aufbau der Vorrichtung ergibt sich, wenn die Maßverkörperungen Bestandteil des Zwischenteils sind und die Abtastköpfe Bestandteil des Stators sind. Damit kann das die zu messenden Verlagerungen mitmachende Zwischenteil frei von Verkabelungen gehalten werden.

Das Radiallager ist vorzugsweise ein Luftlager. Das Luftlager ist relativ steif und reibungsarm.

In einer weiteren Ausgestaltung der Vorrichtung ist zwischen dem Rotor und dem Zwischenteil eine Axiallagerung angeordnet, die den Rotor am Zwischenteil in axialer Richtung ortsfest positioniert. Damit werden Verlagerungen des Rotors entlang der Drehachse auf das Zwischenteil übertragen und können dort gemessen werden.

Die Axiallagerung umfasst vorzugsweise zwei entlang der Drehachse voneinander beabstandete Axiallager.

Zur Messung der Verlagerung des Zwischenteils entlang der Drehachse ist eine der Komponenten Maßverkörperung und Abtastkopf des fünften Messmittels in Richtung der Drehachse zentrisch zwischen den beiden Axiallagern an dem Zwischenteil angeordnet.

Die erfindungsgemäße Vorrichtung kann ergänzt sein durch ein sechstes Messmittel, das dazu ausgebildet ist die Rotation des Rotors um die Drehachse zu messen. Dieses sechste Messmittel umfasst eine Maßverkörperung am Rotor und einen Abtastkopf am Zwischenteil.

Besonders vorteilhaft ist, wenn das Zwischenteil und der Stator jeweils als Hohlzylinder rotationssymmetrisch ausgebildet sind. Bei dieser Ausgestaltung kann zentrisch in den Hohlzylindern das Radiallager angeordnet werden, woraus sich eine besonders raumsparende und steife, stabile Anordnung ergibt.

Weitere vorteilhafte Ausführungen der Erfindung ergeben sich aus den Maßnahmen, die in den abhängigen Ansprüchen aufgeführt sind.

Weitere Einzelheiten und Vorteile der vorliegenden Erfindung werden anhand der nachfolgenden Beschreibung von Ausführungsbeispielen in Verbindung mit den Figuren erläutert.

### KURZE BESCHREIBUNG DER ZEICHNUNGEN

Es zeigt
- Figur 1: eine Schnittdarstellung der erfindungsgemäßen Vorrichtung;
- Figur 2: eine Ansicht des Zwischenteils der Vorrichtung gemäß Figur 1;
- Figur 3: eine weitere Ansicht des Zwischenteils;
- Figur 4: eine Ansicht des Stators der Vorrichtung gemäß Figur 1, und
- Figur 5: eine Ansicht der Kupplung der Vorrichtung gemäß Figur 1.

### BESCHREIBUNG DER AUSFÜHRUNGSFORMEN

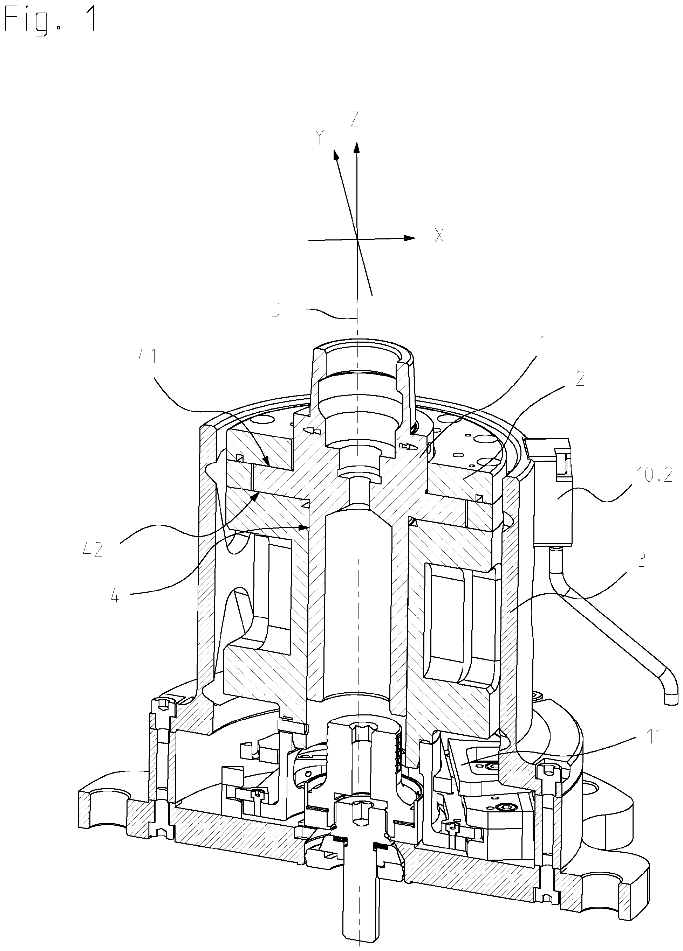

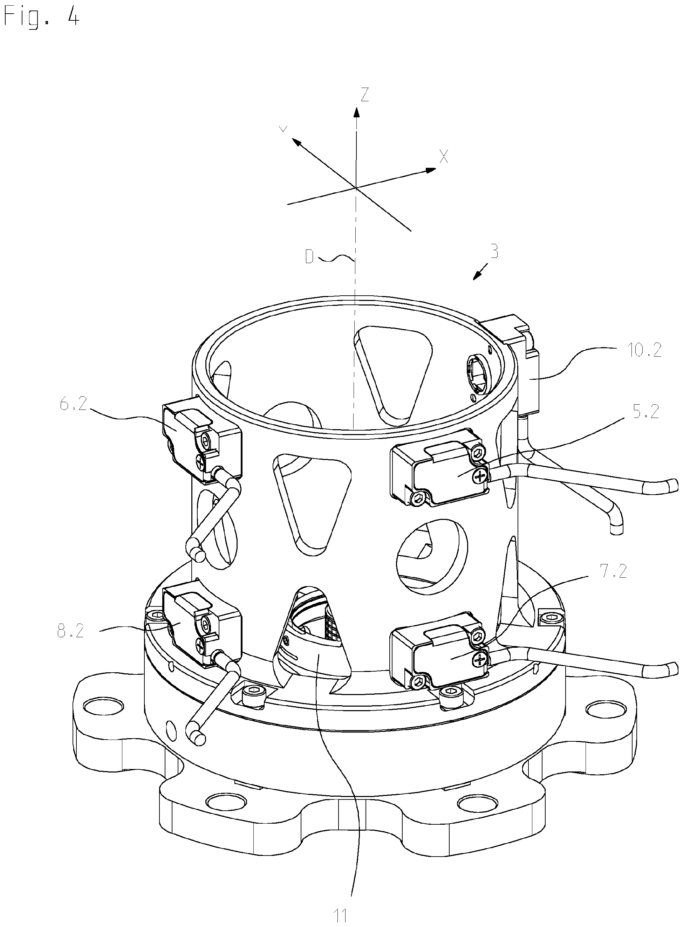

Die Figuren 1 bis 5 zeigen Baugruppen und verschiedene Ansichten einer erfindungsgemäß ausgestalteten Vorrichtung, die nachfolgend im Detail erläutert wird.

Die Vorrichtung zum Messen von Verlagerungen eines rotierenden Objektes - insbesondere einer Spindel - gegenüber einer Basis umfasst einen Rotor 1, an den die zu messende Spindel - z. B. in Form einer rotierenden Werkzeugspindel - angekoppelt werden kann. Dieser Rotor 1 ist drehbar in einem Zwischenteil 2 gelagert. Hierzu ist zwischen dem Rotor 1 und dem Zwischenteil 2 ein die Rotation des Rotors 1 entkoppelndes Radiallager 4 mit einer Drehachse D angeordnet.

Die Vorrichtung umfasst weiterhin einen Stator 3, der zum Messen der Verlagerungen ortsfest an der Basis - z.B. in Form eines Tisches einer Werkzeugmaschine - fixiert wird.

Zwischen dem Zwischenteil 2 und dem Stator 3 ist eine Kupplung 11 angeordnet, welche dazu ausgelegt ist ausschließlich eine Verdrehung des Zwischenteils 2 gegenüber dem Stator 3 um die Drehachse D zu verhindern. Die Kupplung 11 lässt eine Bewegung des Zwischenteils 2 gegenüber dem Stator 3 in allen weiteren fünf Freiheiten (fünf Freiheitsgrade bzw. Bewegungsmöglichkeiten) zu.

Die Vorrichtung enthält nun Messmittel 5, 6, 7, 8, 10 zum Messen von Verlagerungen des Zwischenteils 2 gegenüber dem Stator 3 in diesen fünf Freiheiten.

Das Radiallager 4 überträgt die zu messenden Verlagerungen des Rotors 1 in vier Freiheiten, nämlich eine erste Translation in X-Richtung und eine zweite Translation in Y-Richtung sowie eine erste Rotation um die X-Achse als Drehachse und eine zweite Rotation um die Y-Achse als Drehachse.

Zur Messung der Verlagerungen in diesen vier Freiheiten sind erste Messmittel 5, zweite Messmittel 6, dritte Messmittel 7 und vierte Messmittel 8 vorgesehen. Jedes dieser Messmittel 5, 6, 7, 8 besteht jeweils aus einer Maßverkörperung 5.1, 6.1, 7.1, 8.1 und einem Abtastkopf 5.2, 6.2, 7.2, 8.2. Die jeweilige Maßverkörperung 5.1, 6.1, 7.1, 8.1 kann Bestandteil des Zwischenteils 2 oder alternativ Bestandteil des Stators 3 sein. Entsprechend ist der jeweils dazugehörige Abtastkopf 5.2, 6.2, 7.2, 8.2 der entsprechenden Maßverkörperung 5.1, 6.1, 7.1, 8.1 gegenüberliegend angeordnet Bestandteil des Stators 3 oder alternativ des Zwischenteils 2.

Im dargestellten Ausführungsbeispiel sind die Maßverkörperungen 5., 6.1, 7.1, 8.1 jeweils Bestandteil des Zwischenteils 2 und die Abtastköpfe 5.2, 6.2, 7.2, 8.2 Bestandteil des Stators 3. Zur Messung der Verlagerung in X-Richtung (senkrecht zur Drehachse D) ist das erste Messmittel 5, bestehend aus der Maßverkörperung 5.1 und dem Abtastkopf 5.2 radial zur Drehachse D beabstandet angeordnet.

Zur Messung der Verlagerung in Y-Richtung (senkrecht zur Drehachse D) ist das zweite Messmittel 6 radial zur Drehachse D beabstandet und zum ersten Messmittel 5 in Umfangsrichtung beabstandet angeordnet. Der Versatz in Umfangsrichtung ist vorzugsweise 90°.

Zur Messung der Verlagerung um die erste Rotationsachse, also um die X-Achse, ist zusätzlich zum zweiten Messmittel 6 das vierte Messmittel 8 radial zur Drehachse D beabstandet und zum zweiten Messmittel 6 in Richtung der Drehachse D beabstandet angeordnet.

Zur Messung der Verlagerung um die zweite Rotationsachse, also um die Y-Achs, ist zusätzlich zum ersten Messmittel 5 das dritte Messmittel 7 radial zur Drehachse D beabstandet und zum ersten Messmittel 5 in Richtung der Drehachse D beabstandet angeordnet.

Die Maßverkörperungen 5.1, 6.1, 7.1, 8.1 sind derart ausgebildet, dass durch Abtastung mit dem zugeordneten Abtastkopf 5.2, 6.2, 7.2, 8.2 jeweils ausschließlich tangentiale Bewegungen des Zwischenteils 2 erfasst werden. Die Maßverkörperungen 5.1, 6.1, 7.1, 8.1 sind dazu ausgebildet das vom Abtastkopf 5.2, 6.2, 7.2, 8.2 gebildete positionsabhängige Abtastsignal nur bei tangentialer Verlagerung zu modulieren und bei Verlagerungen in einer senkrecht dazu verlaufenden Richtung, also in radialer Richtung (bezogen auf die Drehachse D) nicht positionsabhängig zu modulieren. Damit wird erreicht, dass Verlagerungen bedingt durch thermische Ausdehnung des Zwischenteils 2 relativ zum Stator 3 nicht in das Messergebnis mit einfließen und dieses verfälschen.

Das Radiallager 4 ist besonders spielfrei auszugestalten, in besonders vorteilhafter Weise als Magnetlager oder als Luftlager ausgebildet.

Das Zwischenteil 2 und der Stator 3 sind vorzugsweise jeweils als Hohlzylinder und somit rotationssymmetrisch ausgebildet. Durch diese Maßnahme ergibt sich ein kompakter und besonders steifer Aufbau mit dem äußeren Hohlzylinder als Stator 3, dem inneren Hohlzylinder als Zwischenteil und dem innerhalb der beiden Hohlzylinder liegenden Rotationslager 4 und Rotor 1.

Die Maßverkörperungen 5.1, 6.1, 7.1, 8.1 und die korrespondierenden Abtastköpfe 5.2, 6.2, 7.2, 8.2 sind an rotationssymmetrischen äußeren- bzw. inneren Umfangsflächen der Hohlzylinder montiert.

Die Vorrichtung ist auch dazu ausgebildet eine Verlagerung einer rotierenden Spindel in Z-Richtung zu messen. Hierzu ist der Rotor 1 in dem Zwischenteil 2 in Z-Richtung spielfrei derart gelagert, dass Z-Bewegungen des Rotors 1 unverfälscht auf das Zwischenteil 2 übertragen werden. Zwischen dem Rotor 1 und dem Zwischenteil 2 sind hierzu zwei Axiallager 41, 42 angeordnet. Diese Axiallager 41, 42 sind vorzugsweise auch Luftlager.

Zur Messung der Z-Verlagerung ist ein fünftes Messmittel 10 vorgesehen, das dazu ausgebildet ist eine Verlagerung des Zwischenteils 2 gegenüber dem Stator 3 in Z-Richtung, also in Richtung der Drehachse D zu messen.

Dieses Messmittel 10 umfasst eine Maßverkörperung 10.1 an einem der beiden Bauteile 2, 3 und einen Abtastkopf 10.2 am anderen der beiden Bauteile 2, 3. Im dargestellten Ausführungsbeispiel ist die Maßverkörperung 10.1 Bestandteil des Zwischenteils 2 und der die Maßverkörperung 10.1 berührungslos abtastende Abtastkopf 10.2 Bestandteil des Stators 3.

Das fünfte Messmittel 10 ist vorzugsweise zentrisch zwischen den beiden Axiallagern 41, 42 (in Z-Richtung betrachtet) angeordnet. Hiermit wird erreicht, dass thermisch bedingte Ausdehnungen des Rotors 1 in Z-Richtung das Messergebnis möglichst wenig beeinflussen.

Damit thermische Einflüsse auf die erfindungsgemäße Vorrichtung möglichst wenig Einfluss haben und die Messung der Verlagerungen nicht nachteilig beeinflussen, ist der Rotor 1 vorzugsweise aus einem Material, das einen vernachlässigbaren thermischen Ausdehnungskoeffizienten aufweist, z.B. aus Invar.

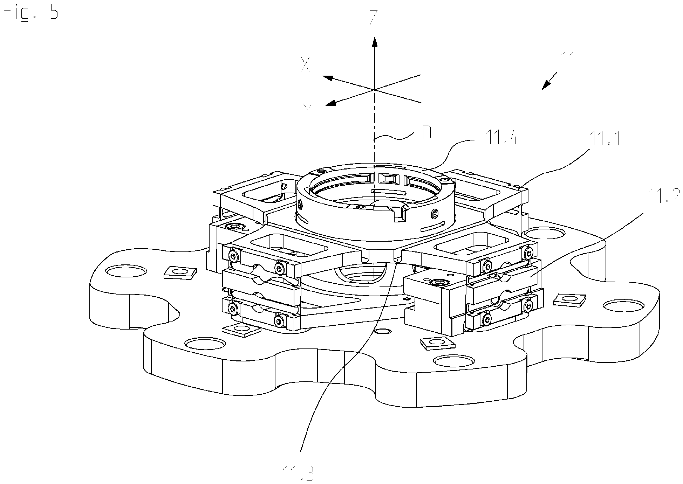

Figur 5 zeigt ein Ausführungsbeispiel der Kupplung 11 im Detail. Die Kupplung 11 ist zwischen dem Zwischenteil 2 und dem Stator 3 angeordnet, und sie ist dazu ausgelegt ausschließlich eine Verdrehung des Zwischenteils 2 gegenüber dem Stator 3 um die Drehachse D zu verhindern. Die Kupplung 11 lässt eine Bewegung des Zwischenteils 2 gegenüber dem Stator 3 in allen weiteren fünf Freiheiten (fünf Freiheitsgrade bzw. Bewegungsmöglichkeiten) zu.

Das Zwischenteil 2 ist starr mit einer Komponente der Kupplung 11 verbunden, wozu der in Figur 5 dargestellte Adapter 11.4 dient. Die spielfreie Bewegungsmöglichkeit in den fünf Freiheitsgraden ist durch die Verwendung von Festkörpergelenken gewährleistet. Der Adapter 11.4 ist mit ersten Kupplungsmitteln 11.1 in Form eines ersten Federparallelogramms verbunden. Dieses erste Kupplungsmittel 11.1 lässt ausschließlich eine Bewegungsmöglichkeit in Y-Richtung zu und umfasst hierzu Festkörpergelenke. Das erste Federparallelogramm überträgt spielfrei Bewegungen des Zwischenteils 2 auf zweite Kupplungsmittel 11.2, wiederum ausgebildet als Federparallelogramm. Dieses zweite Kupplungsmittel 11.2 lässt ausschließlich eine Bewegungsmöglichkeit in X-Richtung zu und umfasst hierzu das zweite Federparallelogramm mit mehreren Festkörpergelenken. Zum Ausgleich von Z-Bewegungen ist ein drittes Kupplungsmittel 11.3 vorgesehen, bestehend wiederum aus einer Anordnung von Festkörpergelenken.

Alternativ kann eine Kupplung in Form einer Balgkupplung oder in Form einer Statorkupplung eingesetzt werden, wie sie zur drehstarren Befestigung von Drehgebern bekannt sind.

In nicht dargestellter Weise kann ein sechstes Messmittel vorgesehen sein, das dazu ausgebildet ist die Rotation des Rotors 1 um die Drehachse D zu messen. Das sechste Messmittel umfasst eine Maßverkörperung am Rotor 1 und einen Abtastkopf am Zwischenteil 2 zur berührungslosen Abtastung der Maßverkörperung. Mit dem sechsten Messmittel wird die aktuelle Winkellage des Rotors 1 um die Drehachse D gegenüber dem Zwischenteil 2 und somit auch gegenüber dem Stator 3 und der Basis gemessen. Eine mit den ersten, zweiten, dritten, vierten und fünften Messmitteln 5, 6, 7, 8, 10 gemessene Verlagerung kann damit einer dazu gemessenen Winkellage zugeordnet werden. Zusätzlich oder alternativ kann das sechste Messmittel dazu eingesetzt werden die aktuelle Drehgeschwindigkeit des Rotors 1 zu messen.

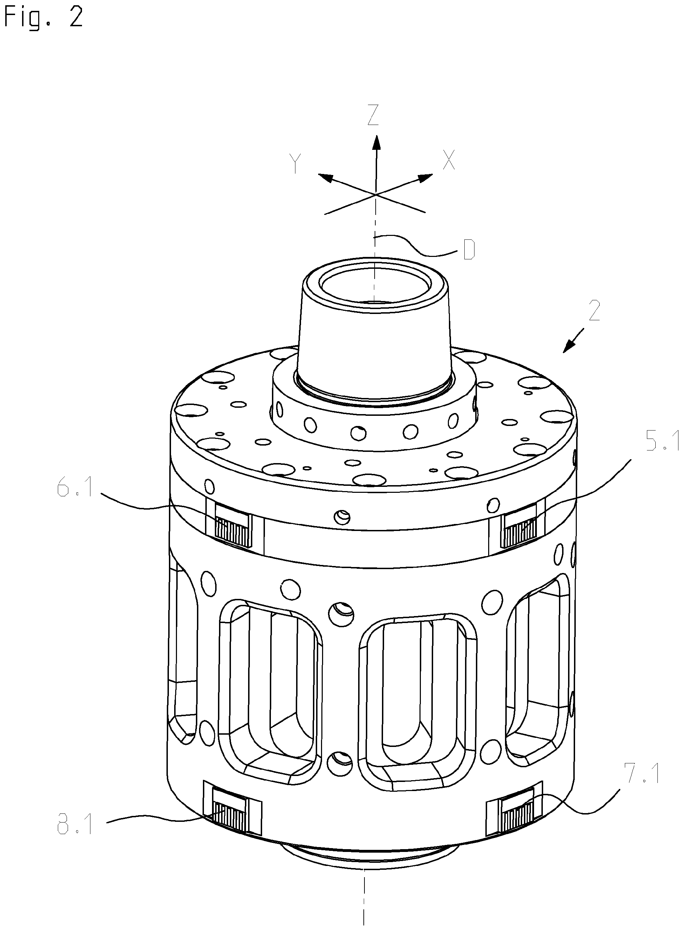

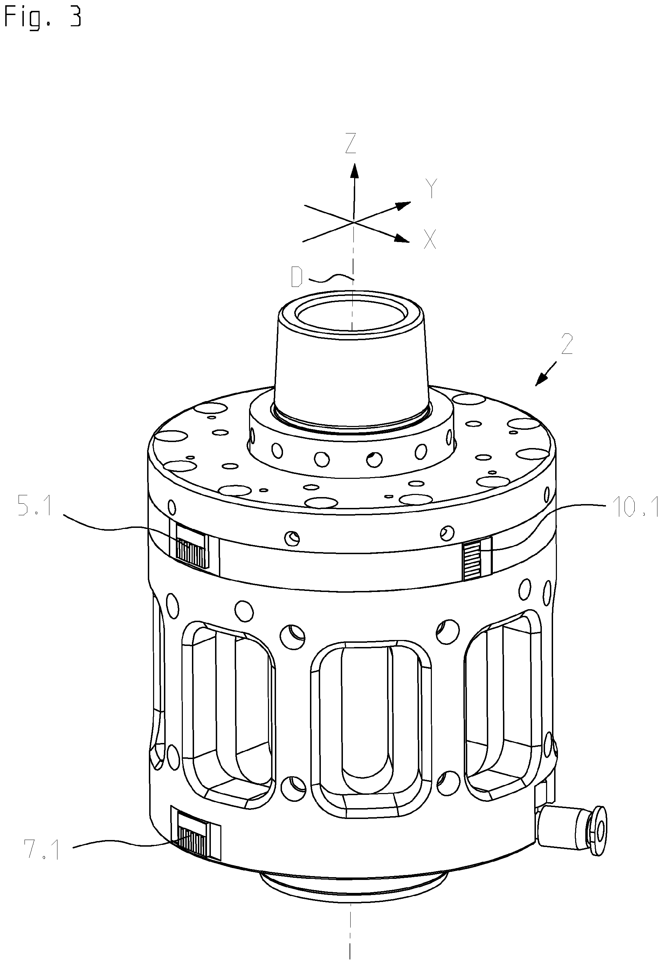

Wie bereits vorstehend ausgeführt, bestehen die Messmittel 5, 6, 7, 8, 10 jeweils aus einer Maßverkörperung 5.1, 6.1, 7.1, 8.1, 10.1 und einem Abtastkopf 5.2, 6.2, 7.2, 8.2, 10.2. Der Abtastkopf 5.2, 6.2, 7.2, 8.2, 10.2 ist jeweils gegenüber der zugeordneten Maßverkörperung 5.1, 6.1, 7.1, 8.1, 10.1 radial beabstandet angeordnet und tastet diese berührungslos ab. Die Maßverkörperungen 5.1, 6.1, 7.1, 8.1, 10.1 sind vorzugsweise inkrementale Teilungen mit Strichen, die jeweils parallel zur Drehachse D ausgerichtet sind, wie in den Figuren 2 und 3 schematisch dargestellt ist. Die Verlagerungen können besonders genau gemessen werden, wenn die Maßverkörperungen 5.1, 6.1, 7.1, 8.1, 10.1 zur lichtelektrischen Abtastung ausgebildet sind. Die Erfindung ist aber nicht auf das lichtelektrische Abtastprinzip beschränk, die Maßverkörperungen 5.1, 6.1, 7.1, 8.1, 10.1 können auch induktiv, magnetisch oder kapazitiv abtastbar ausgestaltet sein.

## Patentansprüche

1. Vorrichtung zum Messen von Verlagerungen eines rotierenden Objektes gegenüber einer Basis, umfassend:
einen Rotor (1);
ein Zwischenteil (2), wobei zwischen dem Rotor (1) und dem Zwischenteil (2) ein die Rotation des Rotors (1) entkoppelndes Radiallager (4) mit einer Drehachse (D) angeordnet ist;
Messmittel (5, 6) zum Messen von Verlagerungen des Zwischenteils (2), **dadurch gekennzeichnet, dass**
das Zwischenteil (2) über eine Kupplung (11) an einem Stator (3) angeordnet ist, wobei die Kupplung (3) dazu ausgebildet ist das Zwischenteil (2) drehstarr an den Stator (3) zu koppeln und Verlagerungen des Zwischenteils (2) gegenüber dem Stator (3) in allen anderen fünf Freiheitsgraden zuzulassen,
weiter **gekennzeichnet durch**
Messmittel (5, 6, 7, 8, 10) welche dazu ausgelegt sind Verlagerungen des Zwischenteils (2) gegenüber dem Stator (3) in diesen fünf Freiheitsgraden zu messen, wobei diese Messmittel (5, 6, 7, 8, 10) jeweils die Komponenten Maßverkörperung (5.1, 6.1, 7.1, 8.1, 10.1) und Abtastkopf (5.2, 6.2, 7.2, 8.2, 10.2) zur berührungslosen Abtastung der Maßverkörperung (5.1, 6.1, 7.1, 8.1, 10.1) umfassen und eine der Komponenten Maßverkörperung (5.1, 6.1, 7.1, 8.1, 10.1) und Abtastkopf (5.2, 6.2, 7.2, 8.2, 10.2) am Zwischenteil (2) und die andere Komponente am Stator (3) angeordnet ist.

2. Vorrichtung nach Anspruch 1, wobei ein erstes Messmittel (5) vorgesehen ist, das radial zur Drehachse (D) beabstandet angeordnet ist und dazu ausgebildet ist eine Verlagerung des Zwischenteils (2) gegenüber dem Stator (3) in einer ersten Richtung (X) senkrecht zur Drehachse (D) zu messen;
ein zweites Messmittel (6) vorgesehen ist, das radial zur Drehachse (D) und zum ersten Messmittel (5) in Umfangsrichtung versetzt angeordnet ist und dazu ausgebildet ist eine Verlagerung des Zwischenteils (2) gegenüber dem Stator (3) in einer zweiten Richtung (Y) senkrecht zur Drehachse (D) zu messen;
ein drittes Messmittel (7) vorgesehen ist, das radial zur Drehachse (D) und zum ersten Messmittel (5) in Richtung der Drehachse (D) beabstandet angeordnet ist und dazu ausgebildet ist eine Verlagerung des Zwischenteils (3) gegenüber dem Stator (4) in der ersten Richtung (X) senkrecht zur Drehachse (D) zu messen;
ein viertes Messmittel (8) vorgesehen ist, das radial zur Drehachse (D) und zum zweiten Messmittel (6) in Richtung der Drehachse (D) beabstandet angeordnet ist und dazu ausgebildet ist eine Verlagerung des Zwischenteils (2) gegenüber dem Stator (3) in der zweiten Richtung (Y) senkrecht zur Drehachse (D) zu messen;
ein fünftes Messmittel (10) vorgesehen ist, das dazu ausgebildet ist eine Verlagerung des Zwischenteils (2) gegenüber dem Stator (3) in Richtung der Drehachse (D) zu messen.

3. Vorrichtung nach Anspruch 2, wobei das erste Messmittel (5) und das zweite Messmittel (6) um 90° in Umfangsrichtung zueinander versetzt angeordnet sind und dazu ausgebildet sind Verlagerungen des Zwischenteils (2) gegenüber dem Stator (3) in zwei um 90° zueinander versetzten Richtungen (X, Y) zu messen.

4. Vorrichtung nach einem der vorhergehenden Ansprüche 2 oder 3, wobei das dritte Messmittel (7) und das vierte Messmittel (8) um 90° in Umfangsrichtung zueinander versetzt angeordnet sind und dazu ausgebildet sind Verlagerungen des Zwischenteils (2) gegenüber dem Stator (3) in zwei um 90° zueinander versetzten Richtungen (X, Y) zu messen.

5. Vorrichtung nach einem der vorhergehenden Ansprüche, wobei die Maßverkörperungen (5.1, 6.1, 7.1, 8.1, 10.1) Bestandteil des Zwischenteils (2) sind und die Abtastköpfe (5.2, 6.2, 7.2, 8.2, 10.2) Bestandteil des Stators (3) sind.

6. Vorrichtung nach einem der vorhergehenden Ansprüche, wobei das Radiallager (4) ein Luftlager ist.

7. Vorrichtung nach einem der vorhergehenden Ansprüche, wobei zwischen dem Rotor (1) und dem Zwischenteil (2) eine Axiallagerung angeordnet ist, die das Zwischenteil (2) am Rotor (1) in axialer Richtung ortsfest positioniert.

8. Vorrichtung nach Anspruch 7, wobei die Axiallagerung zwei entlang der Drehachse (D) voneinander beabstandete Axiallager (41, 42) umfasst.

9. Vorrichtung nach Anspruch 8, wobei eines der Komponenten Maßverkörperung (10.1) und Abtastkopf (10.2) des fünften Messmittels (10) in Richtung der Drehachse (D) zentrisch zwischen den beiden Axiallagern (41, 42) an dem Zwischenteil (2) angeordnet ist.

10. Vorrichtung nach einem der vorhergehenden Ansprüche, wobei ein sechstes Messmittel vorgesehen ist, das dazu ausgebildet ist die Rotation des Rotors (1) um die Drehachse (D) zu messen.

11. Vorrichtung nach Anspruch 10, wobei das sechste Messmittel eine Maßverkörperung am Rotor (1) und einen Abtastkopf am Zwischenteil (2) umfasst.

12. Vorrichtung nach einem der vorhergehenden Ansprüche, wobei das Zwischenteil (2) und der Stator (3) jeweils als Hohlzylinder rotationssymmetrisch ausgebildet sind.

## Claims

1. Device for measuring displacements of a rotating object in relation to a base, comprising:
a rotor (1);
an intermediate part (2), wherein between the rotor (1) and the intermediate part (2) is arranged a radial bearing (4) having a rotational axis (D), which radial bearing decouples the rotation of the rotor (1);
measuring means (5, 6) for measuring displacements of the intermediate part (2),
**characterized in that**
the intermediate part (2) is arranged via a coupling (11) on a stator (3), wherein the coupling (3) is configured to couple the intermediate part (2) in a rotationally rigid manner to the stator (3) and to allow displacements of the intermediate part (2) in relation to the stator (3) in all other five degrees of freedom,
further **characterized by**
measuring means (5, 6, 7, 8, 10) which are designed to measure displacements of the intermediate part (2) in relation to the stator (3) in these five degrees of freedom, wherein these measuring means (5, 6, 7, 8, 10) respectively comprise the components: material measure (5.1, 6.1, 7.1, 8.1, 10.1) and scanning head (5.2, 6.2, 7.2, 8.2, 10.2) for the contactless scanning of the material measure (5.1, 6.1, 7.1, 8.1, 10.1), and one of the components: material measure (5.1, 6.1, 7.1, 8.1, 10.1) and scanning head (5.2, 6.2, 7.2, 8.2, 10.2) is arranged on the intermediate part (2), and the other component on the stator (3).

2. Device according to Claim 1, wherein a first measuring means (5), which is arranged at a radial distance from the rotational axis (D) and is configured to measure a displacement of the intermediate part (2) in relation to the stator (3) in a first direction (X) perpendicular to the rotational axis (D), is provided;
a second measuring means (6), which is arranged radially offset from the rotational axis (D) and from the first measuring means (5) in the peripheral direction and is configured to measure a displacement of the intermediate part (2) in relation to the stator (3) in a second direction (Y) perpendicular to the rotational axis (D), is provided;
a third measuring means (7), which is arranged at a radial distance from the rotational axis (D) and from the first measuring means (5) in the direction of the rotational axis (D) and is configured to measure a displacement of the intermediate part (3) in relation to the stator (4) in the first direction (X) perpendicular to the rotational axis (D), is provided;
a fourth measuring means (8), which is arranged at a radial distance from the rotational axis (D) and from the second measuring means (6) in the direction of the rotational axis (D) and is configured to measure a displacement of the intermediate part (2) in relation to the stator (3) in the second direction (Y) perpendicular to the rotational axis (D), is provided; a fifth measuring means (10), which is configured to measure a displacement of the intermediate part (2) in relation to the stator (3) in the direction of the rotational axis (D), is provided.

3. Device according to Claim 2, wherein the first measuring means (5) and the second measuring means (6) are arranged offset by 90° relative to each other in the peripheral direction and are configured to measure displacements of the intermediate part (2) in relation to the stator (3) in two directions (X, Y) offset by 90° relative to each other.

4. Device according to one of the preceding Claims 2 or 3, wherein the third measuring means (7) and the fourth measuring means (8) are arranged offset by 90° relative to each other in the peripheral direction and are configured to measure displacements of the intermediate part (2) in relation to the stator (3) in two directions (X, Y) offset by 90° relative to each other.

5. Device according to one of the preceding claims, wherein the material measures (5.1, 6.1, 7.1, 8.1, 10.1) are a component part of the intermediate part (2) and the scanning heads (5.2, 6.2, 7.2, 8.2, 10.2) are a component part of the stator (3).

6. Device according to one of the preceding claims, wherein the radial bearing (4) is an air bearing.

7. Device according to one of the preceding claims, wherein between the rotor (1) and the intermediate part (2) is arranged an axial mounting, which positions the intermediate part (2) on the rotor (1) fixedly in the axial direction.

8. Device according to Claim 7, wherein the axial mounting comprises two axial bearings (41, 42), which are spaced apart along the rotational axis (D).

9. Device according to Claim 8, wherein one of the components: material measure (10.1) and scanning head (10.2) of the fifth measuring means (10) is arranged, in the direction of the rotational axis (D), centrally between the two axial bearings (41, 42) on the intermediate part (2).

10. Device according to one of the preceding claims, wherein a sixth measuring means, which is configured to measure the rotation of the rotor (1) about the rotational axis (D), is provided.

11. Device according to Claim 10, wherein the sixth measuring means comprises a material measure on the rotor (1) and a scanning head on the intermediate part (2).

12. Device according to one of the preceding claims, wherein the intermediate part (2) and the stator (3) are respectively configured rotationally symmetrically as a hollow cylinder.

## Revendications

1. Dispositif destiné à mesurer les déplacements d'un objet rotatif par rapport à une base, comprenant:
un rotor (1);
une pièce intermédiaire (2), dans lequel un palier radial (4) avec un axe de rotation (D) découplant la rotation du rotor (1) est disposé entre le rotor (1) et la pièce intermédiaire (2);
des moyens de mesure (5, 6) destinés à mesurer des déplacements de la pièce intermédiaire (2),
**caractérisé en ce que**
la pièce intermédiaire (2) est disposée sur un stator (3) au moyen d'un couplage (11), dans lequel le couplage (3) est configuré afin de coupler de façon calée en rotation la pièce intermédiaire (2) au stator (3) et pour permettre des déplacements de la pièce intermédiaire (2) par rapport au stator (3) dans tous les cinq autres degrés de liberté,
**caractérisé en outre par** des moyens de mesure (5, 6, 7, 8, 10), qui sont conçus pour mesurer des déplacements de la pièce intermédiaire (2) par rapport au stator (3) dans ces cinq degrés de liberté, dans lequel ces moyens de mesure (5, 6, 7, 8, 10) comprennent respectivement les composants étalon (5.1, 6.1, 7.1, 8.1, 10.1) et tête de balayage (5.2, 6.2, 7.2, 8.2, 10.2) pour le balayage sans contact de l'étalon (5.1, 6.1, 7.1, 8.1, 10.1) et un des composants étalon (5.1, 6.1, 7.1, 8.1, 10.1) et tête de balayage (5.2, 6.2, 7.2, 8.2, 10.2) est disposé sur la pièce intermédiaire (2) et l'autre composant est disposé sur le stator (3).

2. Dispositif selon la revendication 1, dans lequel il est prévu un premier moyen de mesure (5), qui est disposé radialement à distance de l'axe de rotation (D) et qui est configuré pour mesurer un déplacement de la pièce intermédiaire (2) par rapport au stator (3) dans une première direction (X) perpendiculaire à l'axe de rotation (D);
il est prévu un deuxième moyen de mesure (6), qui est disposé en position décalée radialement par rapport à l'axe de rotation (D) et en direction périphérique par rapport au premier moyen de mesure (5) et qui est configuré pour mesurer un déplacement de la pièce intermédiaire (2) par rapport au stator (3) dans une deuxième direction (Y) perpendiculaire à l'axe de rotation (D);
il est prévu un troisième moyen de mesure (7), qui est disposé à distance radialement par rapport à l'axe de rotation (D) et dans la direction de l'axe de rotation (D) par rapport au premier moyen de mesure (5) et qui est configuré pour mesurer un déplacement de la pièce intermédiaire (3) par rapport au stator (4) dans la première direction (X) perpendiculaire à l'axe de rotation (D);
il est prévu un quatrième moyen de mesure (8), qui est disposé à distance radialement par rapport à l'axe de rotation (D) et dans la direction de l'axe de rotation (D) par rapport au deuxième moyen de mesure (6) et qui est configuré pour mesurer un déplacement de la pièce intermédiaire (2) par rapport au stator (3) dans la deuxième direction (Y) perpendiculaire à l'axe de rotation (D);
il est prévu un cinquième moyen de mesure (10), qui est configuré pour mesurer un déplacement de la pièce intermédiaire (2) par rapport au stator (3) dans la direction de l'axe de rotation (D).

3. Dispositif selon la revendication 2, dans lequel le premier moyen de mesure (5) et le deuxième moyen de mesure (6) sont décalés de 90° l'un par rapport à l'autre dans la direction périphérique et sont configurés pour mesurer des déplacements de la pièce intermédiaire (2) par rapport au stator (3) dans deux directions (X, Y) décalées de 90° l'une par rapport à l'autre.

4. Dispositif selon l'une quelconque des revendications précédentes 2 ou 3, dans lequel le troisième moyen de mesure (7) et le quatrième moyen de mesure (8) sont disposés avec un décalage de 90° l'un par rapport à l'autre dans la direction périphérique et sont configurés pour mesurer des déplacements de la pièce intermédiaire (2) par rapport au stator (3) dans deux directions (X, Y) décalées de 90° l'une par rapport à l'autre.

5. Dispositif selon l'une quelconque des revendications précédentes, dans lequel les étalons (5.1, 6.1, 7.1, 8.1, 10.1) font partie de la pièce intermédiaire (2) et les têtes de balayage (5.2, 6.2, 7.2, 8.2, 10.2) font partie du stator (3).

6. Dispositif selon l'une quelconque des revendications précédentes, dans lequel le palier radial (4) est un palier à air.

7. Dispositif selon l'une quelconque des revendications précédentes, dans lequel un appui axial, qui positionne de façon fixe la pièce intermédiaire (2) sur le rotor (1) en direction axiale, est disposé entre le rotor (1) et la pièce intermédiaire (2).

8. Dispositif selon la revendication 7, dans lequel l'appui axial comprend deux paliers axiaux (41, 42) espacés l'un de l'autre suivant l'axe de rotation (D).

9. Dispositif selon la revendication 8, dans lequel un des composants étalon (10.1) et tête de balayage (10.2) du cinquième moyen de mesure (10) est disposé sur la pièce intermédiaire (2) au centre entre les deux paliers axiaux (41, 42) dans la direction de l'axe de rotation (D).

10. Dispositif selon l'une quelconque des revendications précédentes, dans lequel il est prévu un sixième moyen de mesure, qui est configuré pour mesurer la rotation du rotor (1) autour de l'axe de rotation (D).

11. Dispositif selon la revendication 10, dans lequel le sixième moyen de mesure comprend un étalon sur le rotor (1) et une tête de balayage sur la pièce intermédiaire (2).

12. Dispositif selon l'une quelconque des revendications précédentes, dans lequel la pièce intermédiaire (2) et le stator (3) sont réalisés chaque fois en forme de cylindre creux à symétrie de révolution.
